# EUROPEAN PATENT APPLICATION

(11) **EP 3 327 584 A1**
(43) Date of publication of application: **30.05.2018**
(21) Application number: 16827129.4
(22) Date of filing: 13.06.2016
(51) Int. Cl.: G06F 17/30, G06F 3/0483

(54) **WEBPAGE SWITCHING METHOD AND APPARATUS IN BROWSER**

(30) Priority: 22.07.2015 CN 201510432461
(71) Applicant: Tencent Technology (Shenzhen) Company Limited, Shenzhen, Guangdong 518000 (CN)
(72) Inventor: LI, Hui, Shenzhen Guangdong 518000 (CN); XU, Fengfeng, Shenzhen Guangdong 518000 (CN); SUN, Haoran, Shenzhen Guangdong 518000 (CN); WANG, Shan, Shenzhen Guangdong 518000 (CN); WU, Kaibo, Shenzhen Guangdong 518000 (CN)
(74) Representative: Awapatent AB
(86) International application number: PCT/CN2016/085518
(87) International publication number: WO 2017/012438

(57) **Abstract**

The present disclosure provides a webpage switching method in a browser, and a corresponding device. In an embodiment, the method includes: a webpage browsed by a user is recorded; an operation for triggering a page switching function is received from the user; it is determined that whether there is an adjacent page of current page in current scene, in which the adjacent page corresponds to the operation; when determining there is adjacent page of current page in current scene, the adjacent page is displayed; when determining there is no adjacent page of current page in current scene, it is determined whether there is an adjacent scene corresponding to the operation of current scene; if yes, an adjacent page of current scene in the adjacent scene is displayed; when determining there is no adjacent scene of current scene, the operation for triggering page switching function is determined to be invalid.

## Description

This application claims priority to a Chinese patent application No. 201510432461.0, titled "Method and Device for Switching Webpage in Browser", which was filed on July 22, 2015. The disclosures of the application No. 201510432461.0 are incorporated here by reference.

### Technical Field

The present disclosure relates to computer technologies, and more particularly, to a method and a device for switching a webpage in a browser.

### Background

Accompanying with developments of computer technologies and information technologies, in order to meet requirements of users, each Application (APP), which may be installed on an electronic terminal, particularly on a mobile electronic terminal, has been developed rapidly, such that the browser is faced with unprecedented challenges, in which the browser is taken as an important entry for an electronic terminal to access a network. In order to meet more requirements of users, further improvements have been made for a browser. Current browser may also provide some functions of an original APP, e.g., the same reading functions and experience of a news client APP, a novel client APP are provided by a browser. However, foregoing browser may only switch webpages browsed in the same scene, by moving forward or backward. When a user expects to switch to a webpage of a previously browsed other scene from a webpage of a current scene, the user needs to re-open the webpage of other scene and check the webpage, which brings inconveniences to the user, thereby affecting experience effects of the user.

### Summary

In view of above, the present disclosure provides a method and a device for switching webpages in a browser, which are easily to switch browsed webpages forward and backward in many scenes.

An embodiment of the present disclosure provides a method for switching webpages in a browser, including:
recording a webpage browsed by a user;
receiving an operation for triggering a page switching function from the user;
determining whether there is an adjacent page of current page in current scene, wherein the adjacent page corresponds to the operation;
when determining that there is the adjacent page of current page in current scene, displaying the adjacent page;
when determining that there is no adjacent page of current page in current scene, further determining whether there is an adjacent scene corresponding to the operation of current scene;
when determining that there is the adjacent scene of current scene, displaying an adjacent page of current scene in the adjacent scene; and,
when determining that there is no adjacent scene of current scene, determining that the operation for triggering the page switching function is invalid.

An embodiment of the present disclosure provides a webpage switching device in a browser, at least including a processor and a memory, wherein the memory stores a browse recording module, a receiving module, an adjacent-page determining module, a first display module, an adjacent-scene determining module and a second display module, when being executed by the processor,
the browse recording module is configured to record a webpage browsed by a user;
the receiving module is configured to receive an operation for triggering a page switching function from the user;
the adjacent-page determining module is configured to determine whether there is an adjacent page of current page in current scene, wherein the adjacent page corresponds to the operation;
when the adjacent-page determining module determines that there is the adjacent page of current page in current scene, the first display module is configured to display the adjacent page;
the adjacent-scene determining module is configured to determine whether there is an adjacent scene corresponding to the operation of current scene, and when determining that there is no adjacent scene of current scene, further determine that the operation for triggering the page switching function is invalid;
when the adjacent-scene determining module determines that there is the adjacent scene of current scene, the second display module is configured to display an adjacent page of current scene in the adjacent scene.

An embodiment of the present disclosure also provides a non-transitory computer storage medium, which stores a computer program, wherein the computer program is configured to:
record a webpage browsed by a user;
receive an operation for triggering a page switching function from the user;
determine whether there is an adjacent page of current page in current scene, wherein the adjacent page corresponds to the operation;
when determining that there is the adjacent page of current page in current scene, display the adjacent page;
when determining that there is no adjacent page of current page in current scene, further determine whether there is an adjacent scene corresponding to the operation of current scene;
when determining that there is the adjacent scene of current scene, display an adjacent page of current scene in the adjacent scene; and,
when determining that there is no adjacent scene of current scene, determine that the operation for triggering the page switching function is invalid.

To make foregoing and other objectives, features and advantages of the present disclosure more apparent, detailed descriptions will be provided in the following, accompanying with preferred embodiments and attached figures.

### Brief Descriptions of the Drawings

FIG.1 is a schematic diagram illustrating a structure of an electronic terminal.
FIG.2 is a flowchart illustrating a method for switching a webpage in a browser, in accordance with an embodiment of the present disclosure.
FIG.3 is a flowchart illustrating a method for switching a webpage in a browser, in accordance with an embodiment of the present disclosure.
FIG.4 is a schematic diagram illustrating how to access webpages in sequence, in accordance with an example of the present disclosure.
FIG.5 is a schematic diagram illustrating how to switch a webpage backward, in accordance with an example of the present disclosure.
FIG.6 is a flowchart illustrating a method for switching a webpage in a browser, in accordance with an embodiment of the present disclosure.
FIG.7 is a schematic diagram illustrating how to switch a webpage forward, in accordance with an example of the present disclosure.
FIG.8 is a flowchart illustrating a method for switching a webpage in a browser, in accordance with an embodiment of the present disclosure.
FIG.9 is a schematic diagram illustrating how to access a webpage, in accordance with another example of the present disclosure.
FIG. 10 is a schematic diagram illustrating a structure of a webpage switching device in a browser, in accordance with an embodiment of the present disclosure.
FIG.11 is a schematic diagram illustrating a structure of a webpage switching device in a browser, in accordance with an embodiment of the present disclosure.
FIG. 12 is a schematic diagram illustrating a structure of a webpage switching device in a browser, in accordance with an embodiment of the present disclosure.
FIG. 13 is a schematic diagram illustrating a structure of a webpage switching device in a browser, in accordance with an embodiment of the present disclosure.
FIG.14 is a schematic diagram illustrating a hardware structure of a webpage switching device in a browser, in accordance with an embodiment of the present disclosure.
FIG.15 is a schematic diagram illustrating a hardware structure of a webpage switching device in a browser, in accordance with an embodiment of the present disclosure.
FIG.16 is a schematic diagram illustrating a hardware structure of a webpage switching device in a browser, in accordance with an embodiment of the present disclosure.
FIG.17 is a schematic diagram illustrating a hardware structure of a webpage switching device in a browser, in accordance with an embodiment of the present disclosure.

### Detailed Descriptions

To further describe technical means adopted by the present disclosure for implementing a predetermined objective, and effects thereof, detailed descriptions about specific implementation modes, structures, characteristics and effects of the present disclosure will be provided in the following, accompanying with attached figures and preferred embodiments.

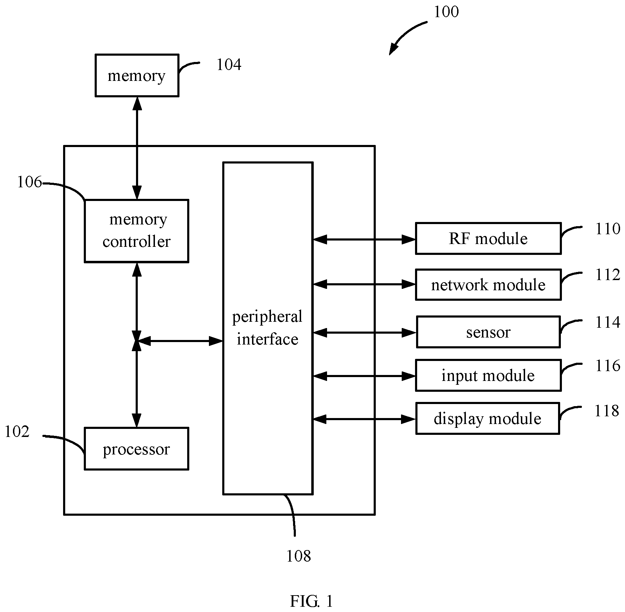

FIG.1 is a schematic diagram illustrating a structure of an electronic terminal 100. As shown in FIG.1, the electronic terminal 100 includes one or more (only one is shown) processors 102, a memory 104, a memory controller 106, a peripheral interface 108, a Radio Frequency (RF) module 110, a network module 112, a sensor 114, an input module 116, and a display module 118. One of ordinary skill in the art may understand that, the structure illustrated in FIG.1 is only a schematic diagram, which is not a limitation to the structure of the electronic terminal 100. For example, the electronic terminal 100 may further include more or less components of FIG.1, or possess a different configuration of FIG.1. A specific example of foregoing electronic terminal 100 may include, but is not limited to, a hand-held computer, a mobile phone, a media player, an On-Board Equipment (OBE), a personal digital assistant, and each combination of foregoing devices.

Persons having ordinary skill in the art may understand that, compared with the processor 102, the remaining components belong to peripherals. The processor 102 is coupled with these peripherals via multiple peripheral interfaces 108. The peripheral interface 108 may be implemented based on the following standards, Universal Asynchronous Receiver/Transmitter (UART), General Purpose Input Output (GPIO), Serial Peripheral Interface (SPI), Inter-Integrated Circuit (I2C), which are not limited to foregoing standards. In some examples, the peripheral interface 108 may only include a bus. In other examples, the peripheral interface 108 may further include other components, for example, one or more controllers, e.g., a display controller for connecting a Liquid Crystal Display (LCD) panel, or the memory controller 106 for connecting the memory. In addition, these controllers may also be separated from the peripheral interface 108, and integrated into the processor 102 or a corresponding peripheral.

The memory 104 may be configured to store a software program and a module, e.g., program instructions/modules corresponding to a webpage switching method/device in a browser in the embodiments of the present disclosure. The processor 102 executes the software program and modules stored in the memory 104, so as to execute each functional application and data processing, that is, implement foregoing webpage switching method in the browser. The memory 104 may include a high-speed Random Access Memory (RAM), and also a non-transitory memory, e.g., one or more magnetic storage devices, a flash memory, or other non-transitory solid-state memory. In some examples, the memory 104 may further include memories, which are remotely set compared with the processor 102. These remote memories may be connected to the electronic terminal 100 via a network. Examples of foregoing network may include, but are not limited to, the Internet, an Intranet, a Local Area Network (LAN), a mobile communication network, and a combination thereof.

The RF module 110 is configured to receive and transmit an electromagnetic wave, implement mutual conversion of an electromagnetic wave and an electronic signal, so as to communicate with a communication network or communicate with another device. The RF module 110 may include each existing circuit component, which is configured to execute these functions, e.g., an antenna, a RF transceiver, a digital signal processor, an encryption/decryption chip, a Subscriber Identification Module (SIM) card, a memory, and so on. The RF module 110 may communicate with each network, such as, the Internet, an Intranet, a wireless network, or communicate with another device via a wireless network. Foregoing wireless network may include a cellular telephone network, a wireless LAN or a Metropolitan Area Network (MAN). Foregoing wireless network may adopt various communication standards, protocols and technologies, including, but are not limited to, a Global System for Mobile Communication (GSM), an Enhanced Data GSM Environment (EDGE), a wideband code division multiple access (W-CDMA), a Code Division Multiple Access (CDMA), a time division multiple access (TDMA), a Wireless, Fidelity (WiFi) (e.g., IEEE 802.11a, IEEE 802.11b, IEEE 802.11g and/or IEEE 802.11n), a Voice Over Internet Protocol (VoIP), a Worldwide Interoperability for Microwave Access (Wi-Max), other protocols for use in mail, an Instant Messaging (IM) and short messages, and any other appropriate communication protocols, even protocols not developed currently.

The network module 112 is configured to receive and transmit a network signal. Foregoing network signal may include a wireless signal, or a wired signal. In an example, foregoing network signal may be WiFi signal. Since working frequency of WiFi is also within an RF band, at this time, the network module and the RF module 110 may include a similar hardware structure, that is, may include a component, such as, an antenna, a RF transceiver, a digital signal processor, an encryption/decryption chip. In an example, foregoing network signal may be a wired network signal. At this time, the network module 112 may include components, such as, a processor, a RAM, a converter, a crystal oscillator.

An example of the sensor 114 includes, but is not limited to, a light sensor, an operating sensor, and other sensors. Specifically, the light sensor may include an ambient light sensor and a proximity sensor. The ambient light sensor may sense light and shade of ambient light. Subsequently, some modules executed by the processor 102 may automatically adjust display output, by utilizing the output of the ambient light sensor. When the electronic terminal 100 is moved to the ear, the proximity sensor may turn off the display output. As one kind of a motion sensor, a gravitational acceleration sensor senses the magnitude of the acceleration in all directions (generally three axes). When a mobile phone is static, the gravitational acceleration sensor may sense the magnitude and direction of gravity. The gravitational acceleration sensor may further identify an application of a mobile phone's gesture (e.g., switch the screen vertically, a related game, a magnetometer gesture calibration), a vibration recognition related function (e.g., pedometer, percussion), and so on. Other sensors configurable by the electronic terminal 100, such as, a gyroscope, a barometer, a hygrometer, a thermometer, are not repeated here.

The input module 116 may be configured to receive input character information, and generate a signal input of a keyboard, a mouse, an action bar, optics or a trackball, which is related with a user setting and a function control. Specifically, the input module 116 may include buttons and touch surfaces. For example, the buttons may include a character button, which may input a character, and a control button, which may trigger a control function. Examples of the control button include "return to main screen" button, power on/off button, camera button, and so on. The touch surface may collect a touch operation of a user on or around the touch surface (e.g., an operation of a user on or around the touch surface 109, by using a finger, a touch-pen, or any appropriate object or attachment), and drive a corresponding connection device according to a preset program. Optional, the touch surface may include two parts, e.g., a touch sensing device and a touch controller. The touch sensing device senses a touch azimuth of a user, senses a signal brought by the touch operation, and transmits the signal to the touch controller. The touch controller receives touch information from the touch sensing device, converts it into contact coordinates, transmits the contact coordinates to the processor 102, receives a command from the processor 102, and executes the command. In addition, the touch surface may also be implemented with multiple types, such as, resistance-type, capacitive-type, infrared, and surface acoustic waves. In addition to the touch surface, the input module 116 may also include other input devices. Foregoing other input devices include, but are not limited to, at least one of: a physical keyboard, a trackball, a mouse, an action bar.

The display module 118 is configured to display information input by a user, information provided for the user, and each Graphical User Interface (GUI) of the electronic terminal 100. These GUIs may be constituted by graphic, text, icon, video or any combination thereof. In an example, the display module 118 includes a display panel. For example, the display panel may be a LCD, an Organic Light-Emitting Diode Display (OLED) display panel, an Electro-Phoretic Display (EPD), and so on. Furthermore, the touch surface may be set on the display panel, so as to form a whole with the display panel. In some other embodiments, the display module 118 may further include a display device of another type, e.g., a projection display device. Compared with a general display panel, the projection display device needs to include some projection components, e.g., a lens group.

Foregoing software program and module include: an Operating System (OS) and a webpage switching module. For example, the OS may be LINUX, UNIX, WINDOWS, or a mobile OS, such as, Android, IOS, which may include various software components, and/or, drives, for managing a system task (e.g., a memory management, a storage device control, a power management, and so on), and communicate with various hardware or software components, so as to provide a running environment of other software components. The webpage switching module is operating on the basis of OS, and is configured to switch a webpage, when the webpage is browsed by a browser in the electronic terminal 100.

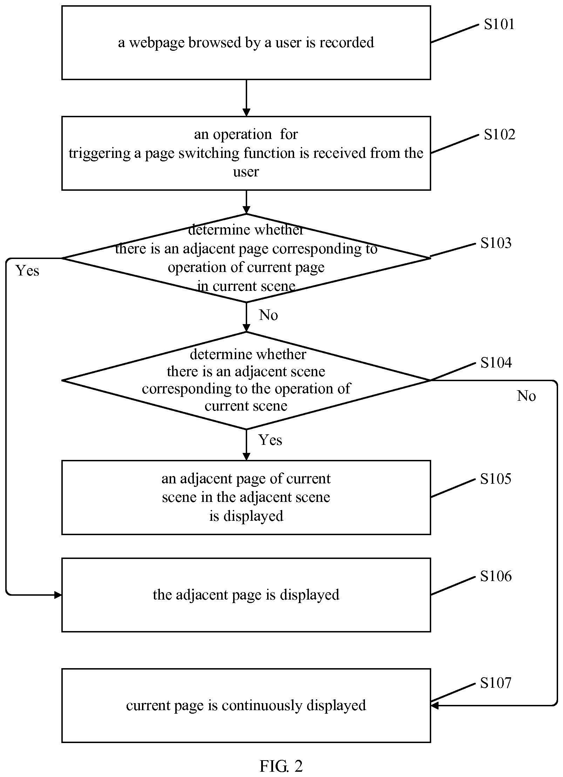

The embodiment provides a webpage switching method in a browser, which may be applied to an electronic terminal 100. As shown in FIG.2, the method includes the following blocks.

In block S101, a webpage browsed by a user is recorded.

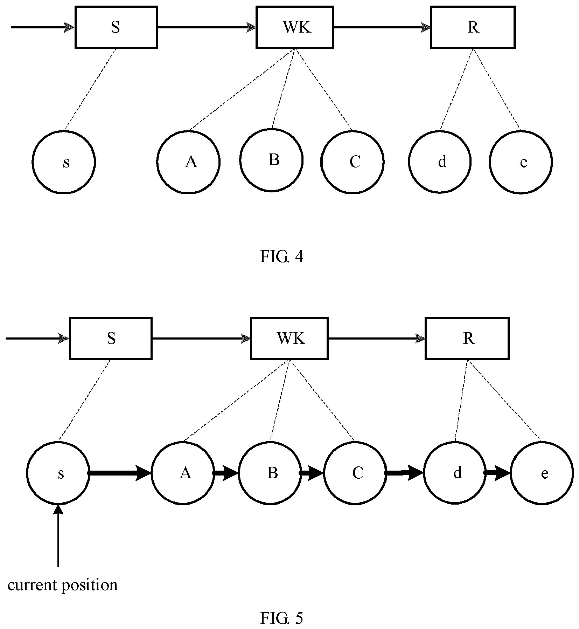

With reference to FIG.4, FIG.4 is a schematic diagram illustrating how to access webpages in sequence, in accordance with an example of the present disclosure. As shown in FIG.4, in a browser, a user browses pages corresponding to three scenes in FIG.4 in sequence. Specifically, FIG.4 illustrates firstly to browse a page s in scene S, switch to scene WK from page s, browse three pages A, B and C of scene WK in sequence, and then switch to scene R from page C, browse two pages d and e of scene R in sequence. That is, during such access process, six pages of s, A, B, C, d, e are displayed in sequence in the browser.

The scene S may be a browsing scene of a home page, which is configured to provide a website navigation function for a user. The scene WK may be a page browsing scene, which is configured to provide a browsing page for a user as in a traditional browser. The scene R may be a news-reading browsing scene, which is configured to provide a browsing page and reading experience for a user as in a news client APP. Specifically, different scenes refer to applications of different functions.

In block S102, an operation for triggering a page switching function is received from the user.

The page switching function includes a forward function and a backward function. In an example, the electronic terminal 100 receives a click from a user on a forward view button ">", or a backward view button "<", which is located on the upper left corner of a page. When a user clicks the forward view button ">", it denotes to trigger a forward function. When a user clicks the backward view button "<", it denotes to trigger a backward function. It may be understood that, the forward view button or backward view button is clicked, so as to view the browsed webpages, which are recorded.

In block S103, it is determined that whether there is an adjacent page corresponding to the operation of current page in current scene.

Specifically, when receiving an operation for triggering a forward function from the user, it is determined that whether there is a subsequent page of current page in current scene, that is, among the recorded webpages, which are browsed by the user, a next page of current page in current scene; when receiving an operation for triggering a backward function from the user, it is determined that whether there is a previous page of current page in current scene, that is, among the recorded webpages, which are browsed by the user, the previous page of current page in current scene. Adjacent pages of current page include a previous page and a next page of current page. An adjacent page of current page and current page may belong to the same scene, or belong to different scenes. For example, among the recorded six webpages of s, A, B, C, d, e, which are browsed by the user, adjacent webpages A and C of webpage B and webpage B belong to scene WK. The adjacent webpage of webpage d includes C and e. Webpages C and d respectively belong to different scenes WK and R. Webpages d and e belong to the same scene R.

In block S104, it is determined that whether there is an adjacent scene corresponding to the operation of current scene.

Specifically, when receiving an operation for triggering a forward function from the user, it is determined that whether there is a subsequent scene of current scene, that is, among recorded different scenes, to which webpages browsed by the user belong, a next scene of current scene; when receiving an operation for triggering a backward function from the user, it is determined that whether there is a previous scene of current scene, that is, among recorded different scenes, to which webpages browsed by the user belong, the previous scene of current scene. The adjacent scene of current scene includes a previous scene and a subsequent scene of current scene. For example, since there is no previous scene for scene S, the adjacent scene of scene S refers to the subsequent scene thereof, which is scene WK. Since there are previous scene and subsequent scene for scene WK, the adjacent scene of scene WK refers to scene S and scene R. Since there is no subsequent scene for scene R, the adjacent scene of scene R refers to the previous scene thereof, which is scene WK.

In block S105, an adjacent page of current scene in the adjacent scene is displayed.

Specifically, when an operation for triggering a forward function is received from the user, and it is determined that there is a subsequent scene for current scene, the first page of the subsequent scene is displayed; when an operation for triggering a backward function is received from the user, and it is determined that there is a previous scene for current scene, the last page of the previous scene is displayed.

In block S106, the adjacent page is displayed.

Specifically, when an operation for triggering a forward function is received from the user, and it is determined that there is a subsequent page of current page in current scene, the subsequent page of current page in current scene is displayed; when an operation for triggering a backward function is received from the user, and it is determined that there is a previous page for current page in current scene, the previous page of current page in current scene is displayed.

In block S107, current page is continuously displayed.

When the determinations in blocks S103 and S104 are both no, it is determined that the operation for triggering page switching function is invalid, and current page is continuously displayed.

On the basis of the method in the embodiment, when switching webpages, the electronic terminal 100 not only determines whether there is an adjacent page of current page in current scene, in which the adjacent page corresponds to the operation for triggering a page switching function of the user, the electronic terminal 100 further determines whether there is an adjacent scene corresponding to the operation in current scene. When it is determined that there is no adjacent page of current page in current scene, while there is an adjacent scene of current scene, a page in the adjacent scene is displayed, while it is not necessary to re-open a new page in the adjacent scene. Thus, by adopting such method, the experience for browsing a page by a user is improved, and operations for re-starting a new page by a user may be reduced, thereby improving browsing efficiency.

Detailed descriptions about switching webpages in a browser in the present disclosure are provided in the following, accompanying with a specific operation in a specific application scene.

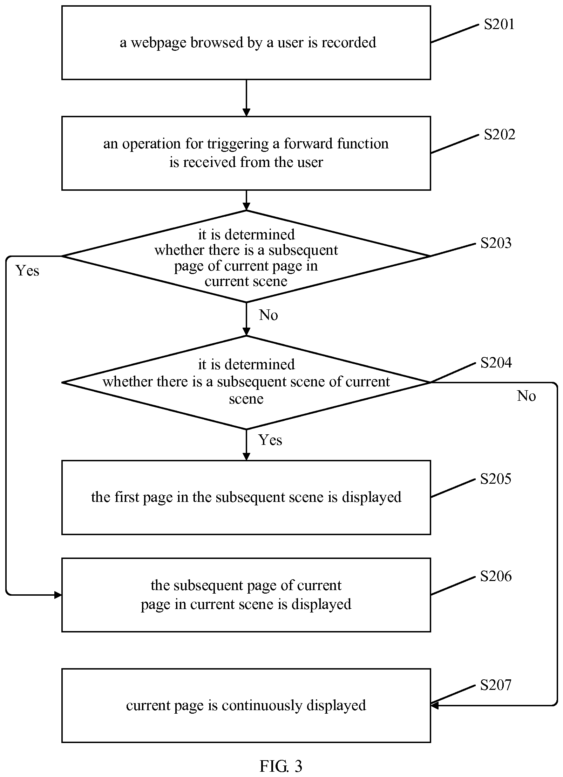

An embodiment provides a method for switching webpages in a browser, which is applied to an electronic terminal 100. The embodiment is similar to previous embodiments. The difference is as follows. As shown in FIG.3, the method includes the following blocks.

In block S201, a webpage browsed by a user is recorded.

In the block, the user may open a browser to browse webpages in the electronic terminal 100. The electronic terminal 100 records webpages browsed by the user. The electronic terminal 100 may be a mobile electronic terminal.

With reference to FIG.4, FIG.4 is a schematic diagram illustrating how to access webpages in sequence, in accordance with an example of the present disclosure. As shown in FIG.4, in a browser, a user browses pages corresponding to three scenes in sequence. Specifically, FIG.4 illustrates firstly to browse page s in scene S, switch to scene WK from page s, browse three pages of A, B, C in scene WK, and then switch to scene R from page C, browse two pages of d and e in scene R. That is, during such access process, the browser displays six pages of s, A, B, C, d and e in sequence.

The scene S may be a browsing scene of a home page, which is configured to provide a website navigation function for a user. The scene WK may be a page browsing scene, which is configured to provide a browsing page for a user as in a traditional browser. The scene R may be a news-reading browsing scene, which may provide a browsing page and reading experience for a user, as a news client APP.

In block S202, an operation for triggering a forward function is received from the user.

In an example, the electronic terminal 100 receives a click from a user on a forward view button ">", which is located on the upper left corner of a page. It may be understood that, recorded webpages, which are browsed, may be viewed by clicking on such forward view button. For example, descriptions are provided by referring to the example shown in FIG.4, when current page is page B, if the user wants to view page C browsed after page B, the user may click on the forward view button ">" and go to page C.

In block S203, it is determined that whether there is a subsequent page of current page in current scene.

In the block, when the electronic terminal 100 receives an operation for triggering a forward function from the user, it is determined that whether there is a subsequent page of current page in current scene. When it is determined that there is no subsequent page of current page in current scene, proceed with block S204; otherwise, proceed with block S206.

In an example, pages are viewed by using a page switching function. Descriptions are provided by referring to the example in FIG.4. If current position of the browser is page B in scene WK, that is, the currently displayed page is page B, when the electronic terminal 100 receives an operation for triggering a forward function from the user, it is determined that whether there is a subsequent page in scene WK. Since in the scene WK, the user previously browsed three pages of A, B, C in sequence, it means that there is a subsequent page C of page B. Thus, in the example, determination in block S203 is yes, proceed with block S206.

In another example, pages are viewed by using the page switching function. Descriptions are still provided by referring to the example in FIG.4. If current position of the browser is page C in scene WK, that is, the currently displayed page is page C, when the electronic terminal 100 receives an operation for triggering a forward function from the user, it is determined that whether there is a subsequent page in scene WK. Since in the scene WK, the user previously browsed three pages of A, B, C, it means that there is no subsequent page for page C in the scene WK. That is, there is no subsequent page of current page in current scene. Thus, in the example, determination in block S203 is no, proceed with block S204.

In block S204, it is determined that whether there is a subsequent scene of current scene.

In the block, when the electronic terminal 100 determines that there is no subsequent page of current page in current scene, it is further determined that whether there is a subsequent scene of current scene. When determining that there is a subsequent scene of current scene, proceed with block S205; otherwise, proceed with block S207.

As shown in FIG.4, in an example, browsed pages are viewed by using the page switching function. When current position of the browser is page C in scene WK, that is, the currently displayed page is page C. After receiving an operation for triggering a forward function from the user, the electronic terminal 100 determines that there is no subsequent page in scene WK, thus, it is necessary to further determine whether there is a subsequent scene of scene WK. FIG.4 illustrates that the user previously browsed three scenes, which are respectively scene S, scene WK and scene R. Thus, it can be seen that there is a subsequent scene R of scene WK. Thus, in the example, the determination in block S204 is that there is a subsequent scene, proceed with block S205.

In another example, if current scene is scene R, when the currently displayed page is page e, since there is no subsequent scene of scene R, in block S204 of the example, it is determined that there is no subsequent scene, proceed with block S207.

In block S205, the first page in the subsequent scene is displayed.

As shown in FIG.4, in an example, pages are viewed by using the page switching function. When current position in the browser is page C of scene WK, that is, the currently displayed page is page C. After receiving an operation for triggering a forward function from the user, the electronic terminal 100 determines whether there is a subsequent page in scene WK. Since in the scene WK, the user only browsed three pages of A, B, C, there is no subsequent page. The electronic terminal 100 further determines whether there is a subsequent scene for scene WK. As shown in FIG.4, there is a subsequent scene R for scene WK. Thus, the electronic terminal 100 determines that there is subsequent scene R for scene WK. Therefore, in the example, after receiving an operation for switching a page backward from the user, the first page d in scene R is displayed.

In block S206, the subsequent page of current page in current scene is displayed.

As shown in FIG.4, in an example, pages are viewed by using the page switching function. If current position of the browser is page B in scene WK, that is, the currently displayed page is page B. After receiving an operation for triggering a forward function from the user, the electronic terminal 100 determines whether there is a subsequent page in scene WK. Since in the scene WK, the user previously browsed three pages of A, B and C, there is a subsequent page C of page B. Thus, in the example, after receiving an operation for viewing backward from the user, the electronic terminal 100 displays page C finally.

In block S207, current page is continuously displayed.

In the block, when determining that there is no subsequent page of current page in current scene, and there is no subsequent scene of current scene, the electronic terminal 100 determines that the operation for triggering a forward function received from the user is invalid, and displays current page continuously.

As shown in FIG.4, when current position of the browser is page e in scene R, that is, the currently displayed page is page e, after receiving an operation for triggering a forward function from the user, the electronic terminal 100 determines that there is no subsequent page for page e in scene R, and further determines that there is no subsequent scene for scene R. Thus, the electronic terminal 100 determines that the operation for triggering a forward function received from the user is invalid, and continuously displays current page.

With reference to FIG.5, FIG.5 is a schematic diagram illustrating how to switch a page backward, in accordance with an example of the present disclosure. As shown in FIG.5, on the basis of a backward view operation of a user, the electronic terminal 100 switches from page s of scene S to page e of scene R. The bold arrow identifies a forward path, which means that the user will browse six pages of s, A, B, C, d, e in sequence once again. By adopting the method in the embodiment, scene S may be switched to scene WK, and scene WK may be switched to scene R.

In an example, in blocks S203 and S204, a method of canGoForward may be adopted to determine whether forward is available. When the determination in block S203, or S204 is yes, a result returned by the method canGoForward is yes, and a method goForward may be used to implement a forward operation, and then switch to a target page; otherwise, the result returned by the method canGoForward is no, current page is continuously displayed.

Furthermore, FIG.4 only illustrates browsed pages in an example. In a practical implementation, there may be more or less browsing scenes and pages. The same page may be browsed multiple times at different positions. For example, in scene WK, page A is firstly browsed, page B is browsed, and then page C is browsed, finally page A is browsed once again. At this time, the secondly browsed page A is a newly started page, and in scene WK, four pages of A, B, C and A are browsed in sequence. When the electronic terminal 100 receives an operation for switching a page forward from the user, in scene WK, four pages of A, B, C and A may be switched in sequence. And then, it may be switched from the last page A to a next scene.

On the basis of the method in the embodiment, when switching webpages, the electronic terminal 100 not only determines whether there is a subsequent page of current page in current scene, but also determines whether there is a subsequent scene of current scene. When determining that there is no subsequent page of current page in current scene, and there is a subsequent scene of current scene, the electronic terminal 100 displays a page in the subsequent scene, while it is not necessary to re-open a new page in the subsequent scene. Thus, by adopting the method, experience for browsing a page by a user may be improved, and operations for re-starting a new page by a user may be reduced, thereby improving browsing efficiency.

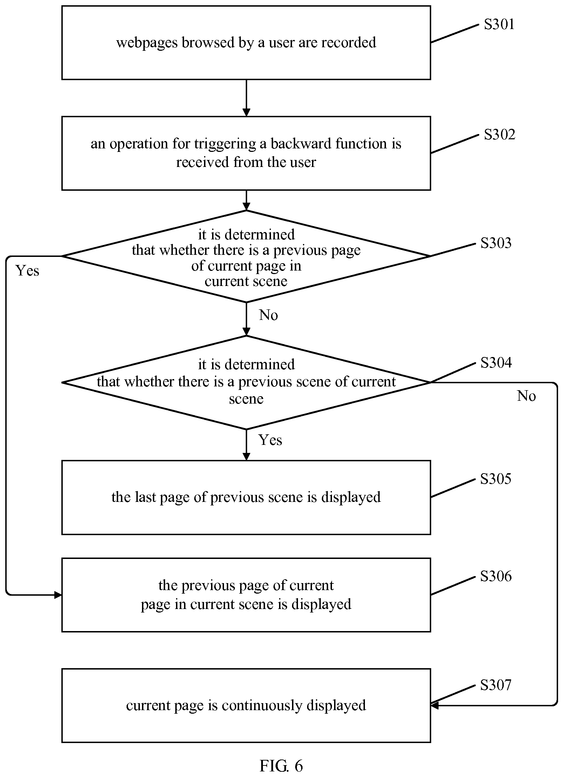

An embodiment provides a webpage switching method in a browser. The embodiment is similar to the embodiment in FIG.2. The difference is as follows. As shown in FIG.6, the method includes the following blocks.

In block S301, webpages browsed by a user are recorded.

In the block, a user may start a browser in an electronic terminal 100, and browse webpages. The electronic terminal 100 records webpages, which are browsed by the user. The electronic terminal 100 may be a mobile electronic terminal.

In block S302, an operation for triggering a backward function is received from the user.

In an example, the electronic terminal 100 receives from the user a click on a backward view button "<", which is located on the upper left corner of a page. It may be understood that, recorded webpages, which are browsed, may be viewed by clicking on the backward view button. For example, descriptions are provided by using the example in FIG.4, when current page is page B, if the user wants to view page A browsed before page B, the user may click on the backward view button "<", and go to page A.

In block S303, it is determined that whether there is a previous page of current page in current scene.

In the block, when receiving an operation for triggering a backward function from the user, the electronic terminal 100 determines whether there is a previous page of current page in current scene, when determining that there is no previous page of current page in current scene, proceed with block S304; otherwise, proceed with block S306.

In an example, pages are viewed by using a page switching function. Descriptions are provided by using the example in FIG.4. When current position of the browser is page B in scene WK, that is, the currently displayed page is page B. When receiving an operation for triggering a backward function from the user, the electronic terminal 100 determines whether there is a previous page in scene WK. Since in scene WK, the user browses three pages of A, B, C in sequence, it means that there is a previous page A for page B. Thus, in the example, the determination in block S303 is yes, proceed with block S306.

In another example, pages are viewed by using the page switching function. Descriptions are still provided, by using the example in FIG.4. When current position of the browser is page A in scene WK, that is, the currently displayed page is page A. After receiving an operation for triggering a backward function from the user, the electronic terminal 100 determines whether there is a previous page in scene WK. Since in scene WK, the user previously browsed three pages of A, B, C, it means that in scene WK, there is no previous page for page A. That is, there is no previous page for current page in current scene. Thus, in the example, the determination in block S303 is no, proceed with block S304.

In block S304, it is determined that whether there is a previous scene of current scene.

In the block, when determining that there is no previous page of current page in current scene, the electronic terminal 100 further determines whether there is a previous scene of current scene; when determining there is a previous scene of current scene, proceed with block S305; otherwise, proceed with block S307.

As shown in FIG.4, in an example, browsed pages are viewed by using the page switching function. When current position of the browser is page A in scene WK, the currently displayed page is page A. After receiving an operation for triggering a backward function from the user, since there is no previous page, the electronic terminal 100 needs to further determine whether there is a previous scene of scene WK. FIG.4 illustrates that three scenes browsed by the user previously are respectively scene S, scene WK, scene R. Thus, it can be seen that, there is a previous scene S for scene WK. Therefore, in the example, the determination in block S304 is that there is a previous scene, proceed with block S305.

In another example, when current scene is scene S, if the currently displayed page is page s, since there is no previous scene for scene S, in the example, the determination in block S304 is that there is no subsequent scene, proceed with block S307.

In block S305, the last page in the previous scene is displayed.

As shown in FIG.4, in an example, pages are viewed by using functions of forward and backward. Current position of the browser is page A in scene WK, that is, the currently displayed page is page A. After receiving an operation for triggering a backward function from the user, the electronic terminal 100 determines whether there is a previous page in scene WK. Since in the scene WK, the user only browses three pages of A, B, C, there is no previous page. The electronic terminal 100 further determines whether there is a previous scene of scene WK. On the basis of FIG.4, it can be seen that there is a previous scene S of scene WK. Thus, the electronic terminal 100 determines that there is a previous scene S of scene WK. Thus, in the example, after the electronic terminal 100 receives an operation for switching a page forward from the user, since there is only one browsed page s in scene S, page s is displayed. Furthermore, when current page is page d, after receiving an operation for triggering a backward function from the user, the last page, page C, in scene WK is displayed.

In block S306, the previous page of current page in current scene is displayed.

As shown in FIG.4, in an example, pages are viewed by using the page switching function. When current position of the browser is page B in scene WK, that is, the currently displayed page is page B. After receiving an operation for triggering a backward function from the user, the electronic terminal 100 determines whether there is a previous page in scene WK. Since in scene WK, the user previously browsed three pages of A, B, C in sequence, there is a previous page A for page B. Thus, in the example, after receiving an operation for viewing forward from the user, the electronic terminal 100 finally displays page A.

In block S307, current page is continuously displayed.

In the block, when the electronic terminal 100 determines that there is no previous page of current page in current scene, and there is no previous scene for current scene, the electronic terminal 100 determines that the operation for triggering a backward function received from the user is invalid, and continuously displays current page.

As shown in FIG.4, when current position of the browser is page s in scene S, that is, the currently displayed page is page s, after receiving an operation for triggering a backward function from the user, the electronic terminal 100 determines that there is no previous page for page s in scene S, and further determines that there is no previous scene for scene S. Thus, the electronic terminal 100 determines that the operation for triggering a backward function received from the user is invalid, and continuously displays current page.

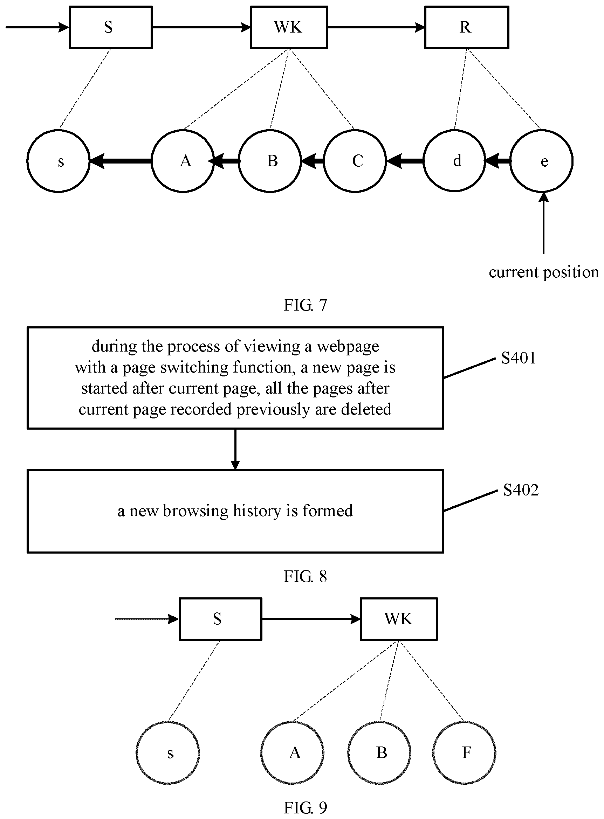

With reference to FIG.7, FIG.7 is a schematic diagram illustrating how to switch a page forward in an example. As shown in FIG.7, on the basis of a forward view operation of a user, an electronic terminal 100 switches from page e of scene R to page s of scene S. The bold arrow identifies a forward path, which denotes that the user will browse six pages of e, d, C, B, A, s in sequence once again. By adopting the method in the embodiment, scene R may be switched to scene WK, and then scene WK may be switched to scene S.

In blocks S303 and S304 of an example, a method of canGoBack may be adopted to determine whether backward is available. When the determination in block S303 or S304 is yes, a result returned by the method of canGoBack is yes, and a method of goBack can be used to implement a forward operation, so as to switch to a target page; otherwise, the result returned by the method of canGoBack is no, current page is continuously displayed.

Furthermore, FIG.4 only illustrates browsed pages in an example. In a practical implementation, there may be more or less browsing scenes and pages, and the same page may be browsed multiple times at different positions. For example, in scene WK, page A is firstly browsed, page B is browsed subsequently, and then page C is browsed, finally page A is browsed once again. At this time, the secondly browsed page A is a newly started page. In such a case, four pages of A, B, C and A in scene WK are browsed in sequence. When receiving an operation for switching a page forward from the user, the electronic terminal 100 switches among four pages of A, B, C and A in scene WK in sequence, and switches from a previous page A to a previous scene.

On the basis of the method in the embodiment, when switching webpages, the electronic terminal 100 not only determines whether there is a previous page of current page in current scene, but also determines whether there is a previous scene of current scene. When determining that there is no previous page of current page in current scene, while there is a previous scene of current scene, the electronic terminal 100 displays a page in the previous scene. It is not necessary to re-open a new page in the previous scene. Thus, by adopting the method, experience for browsing a page by a user may be improved, and operations for re-starting a new page by a user are reduced, thereby improving browsing efficiency.

An embodiment provides a webpage switching method in a browser. The embodiment is similar to the embodiment of FIG.2. The difference is as follows. As shown in FIG.8, the method further includes the following blocks.

In block S401, during a process of viewing webpages by using a page switching function, when a new page is started after current page, all the previously recorded pages after current page are deleted.

In the block, during the process of viewing webpages by a user with a page switching function, a new page is started after current page, the electronic terminal 100 deletes all the previously recorded pages after current page. Specifically, when a new page is started in current scene, where current page is located, the electronic terminal 100 deletes all the previously recorded pages after current page in current scene, and deletes previously recorded pages in all the scenes after current scene. When a new page is started in a new scene, the electronic terminal 100 deletes previously recorded pages of all the scenes after current scene.

With reference to FIG.4 and FIG.9 together, in an example, if the currently displayed page is page B, when the user opens a new page F in scene WK after page B, the electronic terminal 100 deletes a previously recorded page C after page B in scene WK, and deletes previously recorded pages d and e in scene R, which is after scene WK.

In block S402, a new browsing history is formed.

In the block, a new page is recorded. The new page and previously recorded undeleted browsing pages form a new browsing history together.

As shown in FIG.9, FIG.9 is a schematic diagram illustrating accessed pages, which are re-recorded in a case, where a new page F is started after current page B in foregoing example, during a process of viewing webpages by a user with a page switching function. At this time, compared with FIG.4, FIG.9 only includes two scenes: scene S and scene WK. The scene S includes page s. The scene WK includes three pages of A, B and F. Thus, when receiving operations for viewing page forward and viewing page backward from the user subsequently, switches may be completed among the pages shown in FIG.9. For example, when the currently displayed page is page B, if an operation for triggering a forward function is received from the user, page B is switched to page F. When the operation for triggering the forward function is received from the user once again, the page switch is invalid, and page F is still displayed.

In the embodiment, when viewing pages of a new browsing history by using a page switching function, in which the new browsing history is formed after inserting a new page, pages may be switched, based on the modes in the embodiments of FIG.2 and FIG.3.

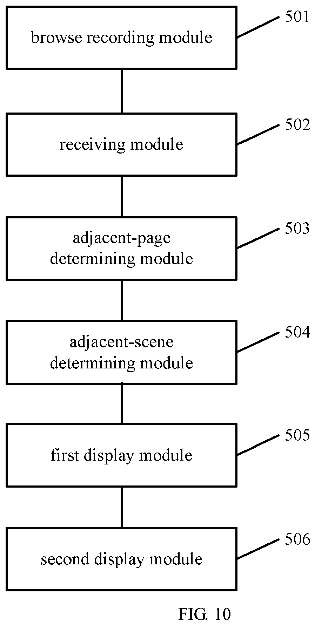

An embodiment provides a webpage switching device in a browser, which is applicable to an electronic terminal 100. As shown in FIG.10, the device includes a browse recording module 501, a receiving module 502, an adjacent-page determining module 503, an adjacent-scene determining module 504, a first display module 505 and a second display module 506.

The browse recording module 501 is configured to record a webpage browsed by a user.

The receiving module 502 is configured to receive an operation for triggering a page switching function from the user. The page switching function includes a forward function and a backward function.

The adjacent-page determining module 503 is configured to determine whether there is an adjacent page corresponding to the operation in current scene.

When determining that there is an adjacent page, the adjacent-page determining module 503 is further configured to call the first display module 505; otherwise, the adjacent-page determining module 503 is further configured to call the adjacent-scene determining module 504.

The adjacent-scene determining module 504 is configured to determine whether there is an adjacent scene corresponding to the operation of current scene. When determining that there is no adjacent scene of current scene, the adjacent-scene determining module 504 is further configured to determine that the operation for triggering the page switching function is invalid.

When the adjacent-page determining module 503 determines that there is an adjacent page of current page in current scene, the first display module 505 is configured to display the adjacent page.

When the adjacent-scene determining module 504 determines that there is an adjacent scene of current scene, the second display module 506 is configured to display an adjacent page of current scene in the adjacent scene.

Other details regarding the device in the embodiment may further refer to foregoing method embodiments, which are not repeated here.

On the basis of the device in the embodiment, when switching webpages, the electronic terminal 100 not only determines whether there is an adjacent page of current page in current scene, in which the adjacent page corresponds to the user's operation for triggering a page switching function, the electronic terminal 100 but also determines whether there is an adjacent scene corresponding to the operation of current scene. When determining that there is no adjacent page of current page in current scene, while there is an adjacent scene of current scene, the electronic terminal 100 further displays a page in the adjacent scene, while it is not necessary to re-open a new page in the adjacent scene. Thus, by adopting such method, experience for browsing a page by a user may be improved, and operations for re-starting a new page by a user may be reduced, so as to improve browsing efficiency.

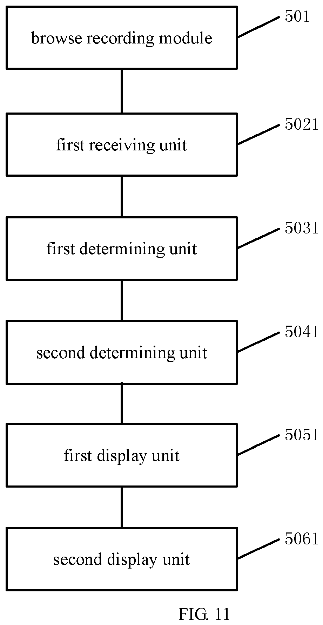

An embodiment provides a webpage switching device in a browser, which is applied to an electronic terminal 100. The electronic terminal 100 may be a mobile electronic terminal. As shown in FIG.11, the device includes a browse recording module 501, a first receiving unit 5021, a first determining unit 5031, a second determining unit 5041, a first display unit 5051 and a second display unit 5061.

The browse recording module 501 is configured to record a webpage browsed by a user.

The first receiving unit 5021 is configured to receive an operation for triggering a forward function from the user.

The first determining unit 5031 is configured to determine whether there is a subsequent page of current page in current scene.

When determining that there is no subsequent page of current page in current scene, the first determining unit 5031 is further configured to call the second determining unit 5041. When determining that there is a subsequent page of current page in current scene, the first determining unit 5031 is further configured to call the first display unit 5051.

When the first determining unit 5031 determines that there is no subsequent page of current page in current scene, the second determining unit 5041 is configured to determine whether there is a subsequent scene of current scene. And when determining that there is no subsequent scene of current scene, the second determining unit 5041 is further configured to determine that the operation for triggering a forward function is invalid.

When determining that there is a subsequent scene of current scene, the second determining unit 5041 is further configured to call the second display unit 5061. When determining that there is no subsequent scene of current scene, the second determining unit 5041 is further configured to determine that the operation for triggering a forward function of the user is invalid, and continuously display current page.

When the first determining unit 5031 determines that there is a subsequent page of current page in current scene, the first display unit 5051 is configured to display the subsequent page.

When the second determining unit 5041 determines that there is a subsequent scene of current scene, the second display unit 5061 is configured to display the first page of the subsequent scene. When the second determining unit 5041 determines that the operation for triggering a forward function is invalid, the second display unit 5061 is further configured to continuously display current page of current scene.

Regarding other details about the device in the embodiment, please refer to foregoing method embodiments, which are not repeated here.

On the basis of the device in the embodiment, when switching webpages, the electronic terminal 100 not only determines whether there is a subsequent page of current page in current scene, but also determines whether there is a subsequent scene of current scene. When determining that there is no subsequent page of current page in current scene, and there is a subsequent scene of current scene, the electronic terminal 100 displays a page in the subsequent scene. It is not necessary for the electronic terminal 100 to re-open a new page of the subsequent scene. Thus, by adopting the device, experience for browsing a page by a user may be improved, and operations for re-starting a new page by a user may be reduced, thereby improving browsing efficiency.

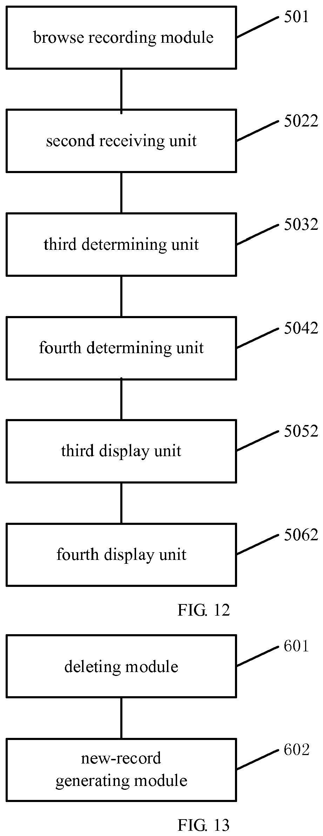

An embodiment provides a webpage switching device in a browser. The device provided by the embodiment is similar to that provided by the embodiment of FIG.8. As shown in FIG.12, the device further includes a browse recording module 501, a second receiving unit 5022, a third determining unit 5032, a fourth determining unit 5042, a third display unit 5052 and a fourth display unit 5062.

The second receiving unit 5022 is configured to receive an operation for triggering a backward function from a user.

The third determining unit 5032 is configured to determine whether there is a previous page of current page in current scene.

When determining that there is no previous page of current page in current scene, the third determining unit 5032 is further configured to call the fourth determining unit 5042. When determining that there is a previous page of current page in current scene, the third determining unit 5032 is further configured to call the third display unit 5052.

When the third determining unit 5032 determines that there is no previous page of current page in current scene, the fourth determining unit 5042 is configured to determine whether there is a previous scene of current scene. When determining that there is no previous scene of current scene, the fourth determining unit 5042 is further configured to determine that the operation for triggering a backward function is invalid.

When determining that there is a previous scene of current scene, the fourth determining unit 5042 is further configured to call the fourth display unit 5062. When determining that there is no previous scene of current scene, and determining that the user's operation for triggering a backward function is invalid, the fourth determining unit 5042 is further configured to continuously display current page.

When the third determining unit 5032 determines that there is a previous page of current page in current scene, the third display unit 5052 is configured to display the previous page.

When the fourth determining unit 5042 determines that there is a previous scene of current scene, the fourth display unit 5062 is configured to display the last page of the previous scene. When the fourth determining unit 5042 determines that the operation for triggering a backward function is invalid, the fourth display unit 5062 is further configured to continuously display current page of current scene.

Regarding other details about the device in the embodiment, please further refer to foregoing method embodiments, which are not repeated here.

On the basis of the device in the embodiment, when switching webpages, the electronic terminal 100 not only determines whether there is a previous page of current page in current scene, but also determines whether there is a previous scene of current scene. When determining that there is no previous page of current scene in current scene, while there is a previous scene of current scene, the electronic terminal 100 further displays a page in the previous scene, without the need of re-opening a new page in the previous scene. Thus, by adopting such device, experience for browsing a page by a user may be improved, and operations for re-starting a new page by a user may also be reduced, thereby improving browsing efficiency.

An embodiment provides a webpage switching device in a browser, which is similar to the device provided by the embodiment of FIG.8. As shown in FIG.13, the device further includes a deleting module 601 and a new-record generating module 602.

During a process of viewing webpages by using a page switching function, the deleting module 601 is configured to start a new page after current page, and delete all the previously recorded pages after current page.

The new-record generating module 602 is configured to generate a new browsing history. Specifically, the new-record generating module 602 is further configured to record a new page, enable the new page and undeleted pages recorded previously to form a new browsing history.

Regarding other details of the device in the embodiment, please further refer to foregoing method embodiments, which are not repeated here.

In the embodiment, when viewing pages of a new browsing history by using a page switching function, in which the new browsing record is formed after inserting a new page, pages may be switched, by using the modes in the embodiments of FIG.2 and FIG.3.

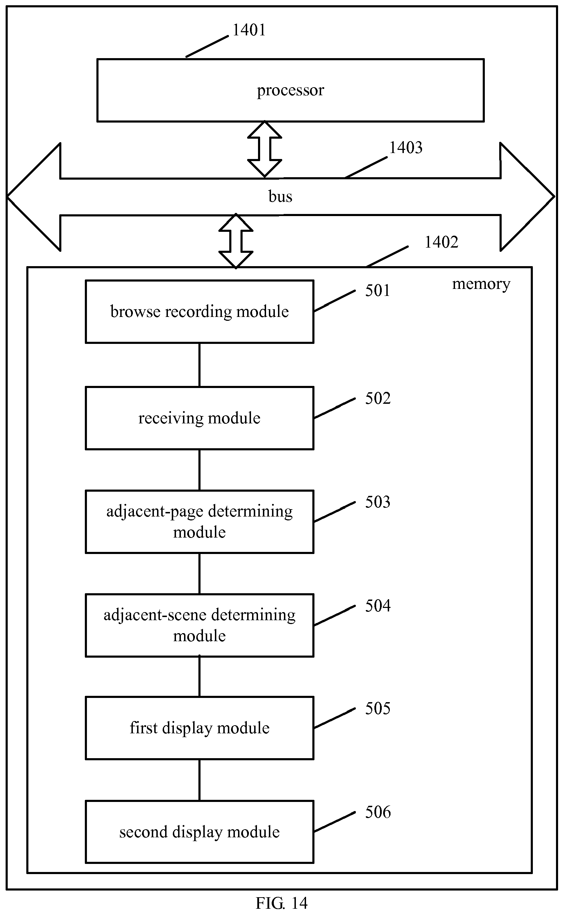

FIG.14 is a schematic diagram illustrating a hardware structure of a webpage switching device in a browser, in accordance with an embodiment of the present disclosure. The device may include a processor 1401, a memory 1402, and a bus 1403. The processor 1401 and memory 1402 are connected with each other via the bus 1403.

The memory 1402 stores a browse recording module 501, a receiving module 502, an adjacent-page determining module 503, an adjacent-scene determining module 504, a first display module 505 and a second display module 506. When being executed by the processor 1401, operations executed by the browse recording module 501, the receiving module 502, the adjacent-page determining module 503, the adjacent-scene determining module 504, the first display module 505, and the second display module 506 are the same as that in the embodiment of FIG.10, which are not repeated here.

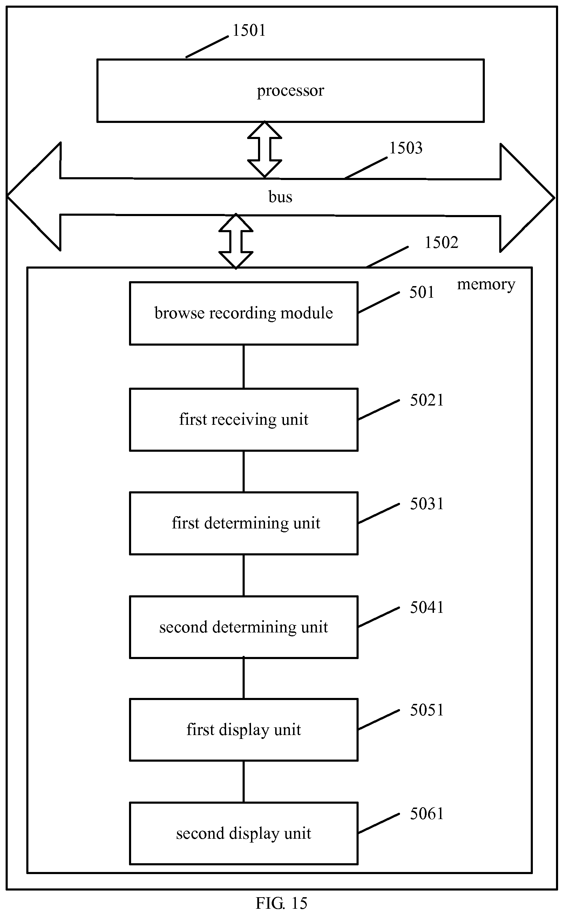

FIG.15 is a schematic diagram illustrating a hardware structure of a webpage switching device in a browser, in accordance with an embodiment of the present disclosure. The device may include a processor 1501, a memory 1502 and a bus 1503. The processor 1501 and the memory 1502 are connected with each other via the bus 1503.

The memory 1502 stores a browse recording module 501, a first receiving unit 5021, a first determining unit 5031, a second determining unit 5041, a first display unit 5051, and a second display unit 5061. When being executed by the processor 1501, operations executed by the browse recording module 501, the first receiving unit 5021, the first determining unit 5031, the second determining unit 5041, the first display unit 5051, and the second display unit 5061 are the same as that in the embodiment of FIG.11, which are not repeated here.

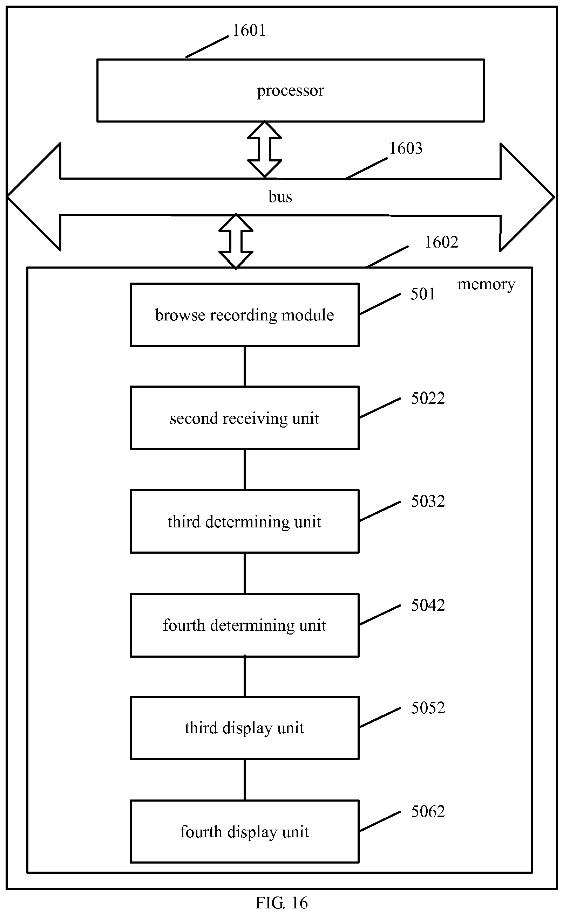

FIG.16 is a schematic diagram illustrating a hardware structure of a webpage switching device in a browser, in accordance with an embodiment of the present disclosure. The device may include a processor 1601, a memory 1602 and a bus 1603. The processor 1601 and the memory 1602 are connected with each other via the bus 1603.

The memory 1602 stores a browse recording module 501, a second receiving unit 5022, a third determining unit 5032, a fourth determining unit 5042, a third display unit 5052 and a fourth display unit 5062. When being executed by the processor 1601, operations of the browse recording module 501, the second receiving module 5022, the third determining unit 5032, the fourth determining unit 5042, the third display unit 5052, and the fourth display unit 5062 are the same as that in the embodiment of FIG.12, which are not repeated here.

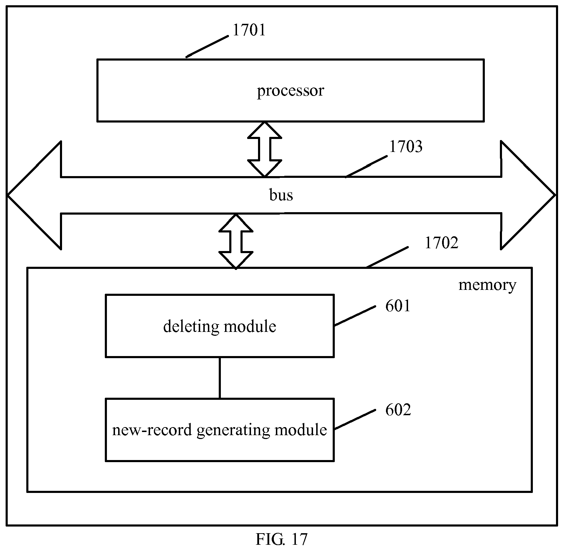

FIG.17 is a schematic diagram illustrating a hardware structure of a webpage switching device in a browser, in accordance with an embodiment of the present disclosure. The device may include a processor 1701, a memory 1702 and a bus 1703. The processor 1701 and the memory 1702 are connected with each other via the bus 1703.

The memory 1702 stores a deleting module 601 and a new-record generating module 602. When being executed by the processor 1701, operations executed by the deleting module 601 and the new-record generating module 602 are the same as that in the embodiment of FIG.13, which are not repeated here.

In addition, an embodiment of the present disclosure also provides a computer readable storage medium, which stores computer executable instructions. Foregoing computer readable storage medium may be a non-transitory memory, such as, a Compact Disk (CD), a hard disk, or a flash memory. Foregoing computer executable instructions may be configured to enable a computer, or a similar computing device to complete various operations of foregoing webpage switching method in a browser.

On the basis of the method and the device in foregoing embodiments, when switching webpages, it is detected that whether there is an adjacent page of current page in current scene, in which the adjacent page corresponds to an operation of a user for triggering a page switching function, it is further determined that whether there is an adjacent scene corresponding to the operation of current scene. When determining that there is no adjacent page of current page in current scene, while there is an adjacent scene of current scene, a page in the adjacent scene is displayed. It is not necessary to re-open a new page in the adjacent scene. Thus, experience for browsing a page by a user may be improved, and operations for re-starting a new page by a user may be reduced, thereby improving browsing efficiency.

The foregoing is only preferred embodiments of the present disclosure, which is not for use in limiting the present disclosure. Although the present disclosure has been disclosed by foregoing preferred embodiments, the present disclosure is not limited. Without departing from the range of technical solutions in the present disclosure, persons having ordinary skill in the art may utilize foregoing disclosed technical contents, and implement some equivalent embodiments by adding some similar changes, such as, modifications. Any simple modifications, equivalent amendments and changes made for foregoing embodiments based on the technical essence of the present disclosure, without departing from contents of technical solutions in the present disclosure, should be covered by the technical solutions of the present disclosure.

## Claims

1. A webpage switching method in a browser, comprising:
recording a webpage browsed by a user;
receiving an operation for triggering a page switching function from the user;
determining whether there is an adjacent page of current page in current scene, wherein the adjacent page corresponds to the operation;
when determining that there is the adjacent page of current page in current scene, displaying the adjacent page;
when determining that there is no adjacent page of current page in current scene, further determining whether there is an adjacent scene corresponding to the operation of current scene;
when determining that there is the adjacent scene of current scene, displaying an adjacent page of current scene in the adjacent scene; and,
when determining that there is no adjacent scene of current scene, determining that the operation for triggering the page switching function is invalid.

2. The method according to claim 1, wherein when the operation for triggering the page switching function received from the user is an operation for triggering a forward function, the method further comprises:
receiving the operation for triggering the forward function from the user;
determining whether there is a subsequent page of current page in current scene;
when determining that there is the subsequent page of current page in current scene, displaying the subsequent page;
when determining that there is no subsequent page of current page in current scene, further determining whether there is a subsequent scene of current scene;
when determining that there is the subsequent scene of current scene, displaying the first page of the subsequent scene; and,
when determining that there is no subsequent scene of current scene, determining that the operation for triggering the forward function is invalid.

3. The method according to claim 1, wherein when the operation for triggering the page switching function received from the user is an operation for triggering a backward function, the method further comprises:
receiving the operation for triggering the backward function from the user;
determining whether there is a previous page of current page in current scene;
when determining that there is the previous page of current page in current scene, displaying the previous page;
when determining that there is no previous page of current page in current scene, further determining whether there is a previous scene of current scene;
when determining that there is the previous scene of current scene, displaying the last page of the previous scene;
when determining that there is no previous scene of current scene, determining that the operation for triggering the backward function is invalid.

4. The method according to claim 1, further comprising:
when determining that the operation for triggering the backward function is invalid, continuously displaying current page of current scene.

5. The method according to claim 1, further comprising:
during a process of viewing webpages by using the page switching function, starting a new page after current page, deleting all the previously recorded pages after current page, and forming a new browsing history.

6. The method according to claim 5, wherein forming the new browsing history comprises:
recording the new page, enabling the new page and undeleted previously recorded pages to form the new browsing history.

7. A webpage switching device in a browser, at least comprising a processor and a memory, wherein the memory stores a browse recording module, a receiving module, an adjacent-page determining module, a first display module, an adjacent-scene determining module and a second display module, when being executed by the processor,
the browse recording module is configured to record a webpage browsed by a user; the receiving module is configured to receive an operation for triggering a page switching function from the user;
the adjacent-page determining module is configured to determine whether there is an adjacent page of current page in current scene, wherein the adjacent page corresponds to the operation;
when the adjacent-page determining module determines that there is the adjacent page of current page in current scene, the first display module is configured to display the adjacent page;
the adjacent-scene determining module is configured to determine whether there is an adjacent scene corresponding to the operation of current scene, and when determining that there is no adjacent scene of current scene, further determine that the operation for triggering the page switching function is invalid;
when the adjacent-scene determining module determines that there is the adjacent scene of current scene, the second display module is configured to display an adjacent page of current scene in the adjacent scene.

8. The device according to claim 7, wherein the page switching function comprises a forward function and a backward function, the receiving module comprises a first receiving unit, the adjacent-page determining module comprises a first determining unit, the adjacent-scene determining module comprises a second determining unit, the first display module comprises a first display unit, the second display module comprises a second display unit, when being executed by the processor,
the first receiving unit is configured to receive an operation for triggering the forward function from the user;
the first determining unit is configured to determine whether there is a subsequent page of current page in current scene;
the second determining unit is configured to determine whether there is a subsequent scene of current scene, when determining that there is no subsequent scene of current scene, further determine that the operation for triggering the forward function is invalid;
when the first determining unit determines that there is the subsequent page of current page in current scene, the first display unit is configured to display the subsequent page; and,
when the second determining unit determines that there is the subsequent scene of current scene, the second display unit is configured to display the first page in the subsequent scene.

9. The device according to claim 7, wherein the page switching function comprises a forward function and a backward function, the receiving module comprises a second receiving unit, the adjacent-page determining module comprises a third determining unit, the adjacent-scene determining module comprises a fourth determining unit, the first display module comprises a third display unit, the second display module comprises a fourth display unit, when being executed by the processor,
the second receiving unit is configured to receive an operation for triggering the backward function from the user;
the third determining unit is configured to determine whether there is a previous page of current page in current scene;
the fourth determining unit is configured to determine whether there is a previous scene of current scene, when determining that there is no previous scene of current scene, further determine that the operation for triggering the backward function is invalid;
when the third determining unit determines that there is the previous page of current page in current scene, the third display unit is configured to display the previous page; and,
when the fourth determining unit determines that there is the previous scene of current scene, the fourth display unit is configured to display the last page of the previous scene.

10. The device according to claim 7, wherein when being executed by the processor, and the adjacent-scene determining module determines that the operation for triggering the page switching function is invalid, the second display module is further configured to continuously display current page of current scene.

11. The device according to claim 7, wherein the memory further stores a deleting module and a new-record generating module, when being executed by the processor,
during a process of viewing webpages by using the page switching function, when a new page is started after current page, the deleting module is configured to delete all the previously recorded pages after current page; and,
the new-record generating module is configured to form a new browsing history.

12. The device according to claim 11, wherein when being executed by the processor, the new-record generating module is further configured to record the new page, enable the new page and undeleted pages recorded previously to form the new browsing history.

13. A non-transitory computer storage medium, which stores a computer program, wherein the computer program is configured to:
record a webpage browsed by a user;
receive an operation for triggering a page switching function from the user;
determine whether there is an adjacent page of current page in current scene, wherein the adjacent page corresponds to the operation;
when determining that there is the adjacent page of current page in current scene, display the adjacent page;
when determining that there is no adjacent page of current page in current scene, further determine whether there is an adjacent scene corresponding to the operation of current scene;
when determining that there is the adjacent scene of current scene, display an adjacent page of current scene in the adjacent scene; and,
when determining that there is no adjacent scene of current scene, determine that the operation for triggering the page switching function is invalid.

14. The non-transitory computer storage medium according to claim 13, wherein the computer program is further configured to:
receive an operation for triggering a forward function from the user;
determine whether there is a subsequent page of current page in current scene;
when determining that there is the subsequent page of current page in current scene, display the subsequent page;
when determining that there is no subsequent page of current page in current scene, further determine whether there is a subsequent scene of current scene;
when determining that there is the subsequent scene of current scene, display the first page in the subsequent scene;
when determining that there is no subsequent scene of current scene, determine that the operation for triggering the forward function is invalid.

15. The non-transitory computer storage medium according to claim 13, wherein the computer program is further configured to:
receive an operation for triggering a backward function from the user;
determine whether there is a previous page of current page in current scene;
when determining that there is the previous page of current page in current scene, display the previous page;
when determining that there is no previous page of current page in current scene, further determine whether there is a previous scene of current scene;
when determining that there is the previous scene of current scene, display the last page of the previous scene; and,
when determining that there is no previous scene of current scene, determine that the operation for triggering the backward function is invalid.

16. The non-transitory computer storage medium according to claim 13, wherein the computer program is further configured to:
when determining that the operation for triggering the page switching function is invalid, continuously display current page of current scene.

17. The non-transitory computer storage medium according to claim 13, wherein the computer program is further configured to:
during a process of viewing webpages by using the page switching function, when a new page is started after current page, delete all the previously recorded pages after current page, and form a new browsing history.

18. The non-transitory computer storage medium according to claim 17, wherein the computer program is further configured to:
record the new page, enable the new page and undeleted pages recorded previously to form the new browsing history.
